# EUROPÄISCHE PATENTSCHRIFT

(11) **EP 1 556 670 B1**
(45) Veröffentlichungstag und Bekanntmachung des Hinweises auf die Patenterteilung: **26.09.2018**
(21) Anmeldenummer: 03750718.3
(22) Anmeldetag: 20.10.2003
(51) Int. Cl.: G01F 1/32

(54) **WIRBELSTRÖMUNGSAUFNEHMER**
VORTEX FLOW SENSOR
DEBITMETRE A TOURBILLONS

(30) Priorität: 23.10.2002 DE 10249543
(43) Veröffentlichungstag der Anmeldung: 27.07.2005
(73) Patentinhaber: Endress + Hauser Flowtec AG, 4153 Reinach (CH)
(72) Erfinder: HÖCKER, Rainer, 79761 Waldshut (DE); KOUDAL, Ole, CH-5400 Baden (CH); NIERLICH, Thomas, Greenwood IN 46142 (US)
(74) Vertreter: Andres, Angelika Maria
(86) Internationale Anmeldenummer: PCT/EP2003/011607
(87) Internationale Veröffentlichungsnummer: WO 2004/038344

(56) Entgegenhaltungen:
- EP-A- 0 666 467
- WO-A-03/021201
- DD-A5- 287 995
- GB-A- 2 084 324
- US-A- 3 587 312
- US-A- 3 719 073
- US-B1- 6 276 218
- US-B1- 6 352 000

## Beschreibung

Die Erfindung betrifft Wirbelströmungsaufnehmer zur Messung des Volumendurchflusses, des Massedurchflusses oder der Strömungsgeschwindigkeit, des in einem Messrohr in einer Strömungsrichtung fließenden Fluids mit einem in einem Lumen des Messrohrs angeordneten, der Erzeugung Kármán'scher Wirbel dienenden Staukörper.

Der Volumendurchfluss bzw. der Massedurchfluss ist per definitionem das pro Zeiteinheit durch den Querschnitt des Messrohrs strömende Volumen bzw. die pro Zeiteinheit durch den Querschnitt des Messrohrs strömende Masse des Fluids. Im Betrieb eines derartigen Wirbelströmungsaufnehmer entsteht bekanntlich stromabwärts des Staukörpers eine Kármán'sche Wirbelstraße, deren Druckschwankungen von einem Wirbelsensor in ein elektrisches Signal umgeformt werden, dessen Frequenz wiederum proportional zum Volumendurchfluss bzw. zur Strömungsgeschwindigkeit ist.

In der US-A 60 03 384 ist ein heute üblicher Wirbelströmungsaufnehmer zur Messung des Volumendurchflusses oder der Strömungsgeschwindigkeit eines Fluids beschrieben, das in einem eine Rohrwand aufweisenden Messrohr in einer Strömungsrichtung fließt, welcher Wirbelströmungsaufnehmer umfasst:
- einen entlang eines Durchmessers des Messrohrs angeordneten Staukörper, der
   -- der Erzeugung Kármán'scher Wirbel dient und
   -- an einer ersten und einer zweiten Fixierstelle, die einander gegenüber liegen, mit der Rohrwand des Messrohrs von innen verbunden ist,
- einen auf von den Wirbeln erzeugte Druckschwankungen ansprechenden Wirbelsensor, der stromabwärts vom Staukörper in eine Bohrung der Rohrwand des Messrohrs eingesetzt ist und diese Bohrung abdichtet,
- wobei das Zentrum der Bohrung zusammen mit dem Zentrum der ersten Fixierstelle des Staukörpers auf einer Mantellinie des Messrohrs liegt und
- wobei der Wirbelsensor umfasst:
   -- eine die Bohrung überdeckende Membran mit einer fluid-zugewandten ersten Oberfläche und einer fluid-abgewandten zweiten Oberfläche,
   -- eine an der ersten Oberfläche der Membran befestigte keilförmige Sensorfahne, die
      --- kürzer als der Durchmesser des Messrohrs ist sowie
      --- mit der Mantellinie des Messrohrs fluchtende Hauptflächen sowie eine Frontkante aufweist, und
   -- ein an der zweiten Oberfläche befestigtes Sensorelement.

Wird auch noch die Temperatur des Fluids bestimmt, so können unter Berücksichtigung der momentanen Dichte des Fluids und ggf. auch eines momentanen Drucks im Fluid weitere Eigenschaften des Fluids, insb. auch dessen momentaner thermodynamischer Zustand, ermittelt und somit unter Verwendung des Volumendurchflusses auch ein Massedurchfluss gemessen werden. Dies kann z.B. mittels eines Mikroprozessors erfolgen, der in einer entsprechend mit dem Wirbelströmungsaufnehmer verbunden und von diesem gelieferte Meßsignale verarbeitenden Auswerte-Elektronik vorgesehen ist.

Vorgenannte Sachverhalte sind im Zusammenhang mit der Temperaturmessung bei Wirbelströmungsaufnehmern mit unterschiedlichen Arten von Wirbelsensoren schon lange vorbeschrieben. So zeigen die US-A 40 48 854 und die US-A 44 04 858 jeweils einen Temperatursensor, der an der Rohrwand des Messrohrs von innen so angeordnet ist, dass er vom strömenden Fluid überstrichen wird.

In der JP-A 2000-2567 ist ein Wirbelströmungsaufnehmer zur Messung des Massedurchflusses, des Volumendurchflusses oder der Strömungsgeschwindigkeit eines Fluids beschrieben, das in einem eine Rohrwand aufweisenden Messrohr in einer Strömungsrichtung fließt, welcher Wirbelströmungsaufnehmer umfasst:
- einen einseitig an der Rohrwand von innen mittels einer Bodenplatte fixierten Flügel, der
   -- im Betrieb Kármán'sche Wirbel erzeugt,
   -- kürzer als ein Durchmesser des Messrohrs ist und
   - senkrecht zur Strömungsrichtung ausgerichtete parallele Hauptflächen sowie eine gerundete Frontfläche aufweist,
      --- auf der ein Temperatursensor angeordnet ist,
- in der Nähe der Fixierstelle befestigte erste Sensorelemente für von den Kármán'schen Wirbeln erzeugte Druckschwankungen des strömenden Fluids und
- in der Nähe der Fixierstelle befestigte zweite Sensorelemente für vom strömenden Fluid erzeugte Auslenkungen des Flügels.

Auch dieser Temperatursensor wird vom strömenden Fluid überstrichen und ist somit, wie die Erfinder festgestellt haben, nicht gegenüber allen im Betrieb vorkommenden Fluiden resistent, d.h. manche Fluide korrodieren derart angeordnete Temperatursensoren.

Diese den Temperatursensor korrodierenden Fluide müssen daher durch den Hersteller der Wirbelströmungsaufnehmer von der Verwendung zusammen mit ihm ausgeschlossen werden. Ein derartiger Ausschluss schmälert jedoch die Breite der Anwendung dieser Wirbelströmungsaufnehmer, also die Universalität ihrer Anwendungen, und somit auch ihre Attraktivität auf dem Markt.

In der DD-A 287 995 wiederum ist ein Wirbelströmungsaufnehmer mit einer am Staukörper fixierten Sensorfahne und einem darin angeordneten piezoelektrischen Wirbelsensor sowie einem einzigen darin angeordneten Temperatursensor gezeigt. In der US-A 37 19 073 ist ein Wirbelströmungsaufnehmer mit einem Staukörper und zwei stromabwärts davon einander gegenüberliegend am Rohr angeordneten Temperatursensoren gezeigt.

Eine der Erfindung zugrundeliegende Aufgabe besteht darin, Wirbelströmungsaufnehmer mit einem Staukörper und mit einem in der Rohrwand des Messrohrs fixierten Wirbelsensor sowie mit wenigstens zwei Temperatursensoren anzugeben, die derart angeordnet sind, daß der jeweilige Wirbelströmungsaufnehmer auch zusammen mit solchen Fluiden benutzt werden darf, die die Temperatursensoren korrodieren würden.

Zur Lösung dieser Aufgabe besteht die Erfindung in einem Wirbelströmungsaufnehmer zum Messen einer Strömungsgeschwindigkeit, eines Volumendurchflusses und/oder eines Massedurchflusses eines in einer Rohrleitung strömenden Fluids, welcher Wirbelströmungsaufnehmer umfasst:
- ein in den Verlauf der Rohrleitung eingesetztes Messrohr zum Führen des strömenden Fluids,
- einen im Lumen des Messrohrs angeordneten, der Erzeugung *Kármán'scher* Wirbel im Fluid dienenden Staukörper,
- einen auf von den Wirbeln erzeugte Druckschwankungen ansprechenden Wirbelsensor
   -- mit einer stromabwärts vom Staukörper in das strömende Fluid eintauchenden, von den Wirbeln, insb. wiederholt, bewegte Sensorfahne, und
   -- mit wenigstens einem an die Sensorfahne mechanisch gekoppeltes und auf Bewegungen der Sensorfahne reagierendes Sensorelement,
- einen ersten und wenigstens einen zweiten Temperatursensor zum Erfassen von Temperaturen im strömenden Fluid,
- sowie einer Auswerte-Elektronik zur Berechnung der Strömungsgeschwindigkeit, des Volumendurchfluss bzw. des Massendurchflusses anhand des vom Wirbelsensor gelieferten Wirbelsignals, wobei die Auswerte-Elektronik dafür eingerichtet ist, unter Verwendung der von den Temperatursensoren (34, 35) gelieferten Temperatursignale in Verbindung mit in der Auswerte-Elektronik gespeicherten mathematischen Modellen für den Wärmeübergang vom Fluid zur Sensorfahne (31) oder Wärmeausbreitungsvorgänge innerhalb der Sensorfahne (31) die Temperatur des Fluids zu bestimmen.

In einer ersten Variante der Erfindung sind zudem die beiden Temperatursensoren innerhalb der Sensorfahne voneinander beabstandet angeordnet, und sind die beiden Temperatursensoren so in die Sensorfahne eingesetzt, daß sie im Betrieb vom strömenden Fluid nicht benetzt werden.

In einer zweiten Variante der Erfindung sind die beiden Temperatursensoren innerhalb des Staukörpers voneinander beabstandet angeordnet, und sind die beiden Temperatursensoren so in den Staukörper eingesetzt, daß sie im Betrieb vom strömenden Fluid nicht benetzt werden.

Nach einer bevorzugten ersten Ausgestaltung der Erfindung weist die Sensorfahne oder der Staukörper wenigstens ein Sackloch auf, in das wenigstens einer der beiden Temperatursensoren eingesetzt ist.

Nach einer bevorzugten zweiten Ausgestaltung der Erfindung sind beide Temperatursensoren in das wenigstens Sackloch eingesetzt.

Ein Vorteil der Erfindung besteht darin, daß die Temperatursensoren keine Berührungsmöglichkeit mit dem strömenden Fluid haben und somit von diesem auch nicht korrodiert werden können. Trotzdem sind die Temperatursensoren so nahe am Fluid angeordnet, daß sie dessen Temperatur praktisch verzögerungslos, insb. auch an verschiedenen Meßpunkten, erfaßen; sie sind nämlich vom Fluid lediglich durch die dünne Wand des Wirbelsensors bzw. des Staukörpers getrennt und diese Teile sind wie die übrigen Teile des Wirbelströmungsaufnehmers aus einem Metall, bevorzugt Edelstahl, hergestellt und somit gut wärmleitend.

Ein weiterer Vorteil der Erfindung besteht darin, daß die in der Sensorfahne bzw. im Staukörper angeordneten Temperatursensoren, wie z.B. auch in F. P. Incropera und D. P. DeWitt "Fundamentals of Heat and Mass Transfer", 4. Edition, 1996, ISBN 0-471-30460-3, Seiten 114 bis 119 und 407 gezeigt, zu einer verbesserten Messung der Fluid-Temperatur, insb. auch bei strömendem Fluid führen.

Die Erfindung und weitere Vorteile werden nun anhand von Ausführungsbeispielen näher erläutert, die in den Figuren der Zeichnung dargestellt sind. Gleiche Teile sind in unterschiedlichen Figuren mit denselben Bezugszeichen bezeichnet, die jedoch weggelassen sind, wenn es die Übersichtlichkeit erfordert.
- Fig. 1: zeigt in Strömungsrichtung gesehen perspektivisch und teilweise aufgeschnitten einen Wirbelströmungsaufnehmer entsprechend der ersten Variante der Erfindung,
- Fig. 2: zeigt gegen die Strömungsrichtung gesehen perspektivisch und teilweise aufgeschnitten den Wirbelströmungsaufnehmer von Fig. 1,
- Fig. 3: zeigt perspektivisch in einer Unteransicht den Wirbelsensor von Fig. 1 und 2,
- Fig. 4: zeigt einen perspektivischen Längschnitt des Wirbelsensors der Fig. 3, und
- Fig. 5: zeigt analog zu Fig. 2 perspektivisch und teilweise aufgeschnitten einen Wirbelströmungsaufnehmer entsprechend der zweiten Variante der Erfindung.

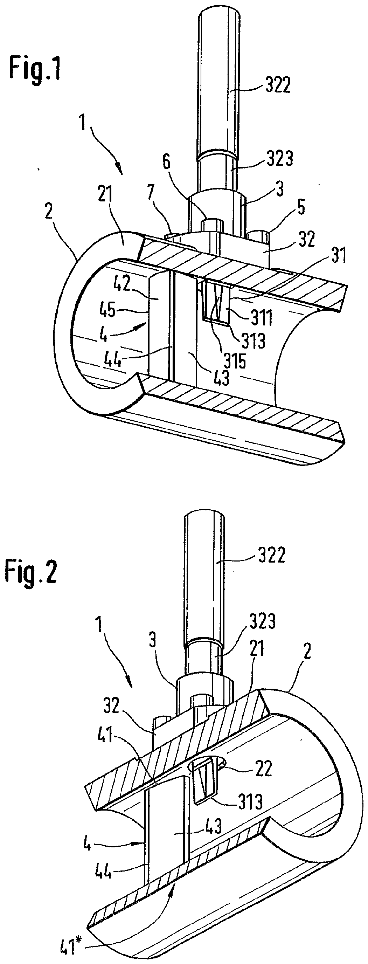

Die Fig. 1 bis 4 werden im Folgenden gemeinsam beschrieben, da alle Einzelheiten nicht in jeder Figur darstellbar sind. Die in den Fig. 1 und 2 zunächst gezeigten und der Übersicht dienenden perspektivischen Ansichten eines Ausführungsbeispiel der ersten Variante zeigen, einerseits in Strömungsrichtung gesehen (Fig. 1) und andererseits gegen die Strömungsrichtung gesehen (Fig. 2), einen teilweise aufgeschnittenen Wirbelströmungsaufnehmer 1 mit einem an einer Rohrwand 21 eines Messrohrs 2 fixierten und durch eine Bohrung 22 hindurch ragenden Wirbelsensor 3. Dieser ist bevorzugt ein dynamisch kompensierter Wirbelsensor mit einem kapazitiven Sensorelement, wie er in der US-A 60 03 384 beschrieben ist.

Entlang eines Durchmessers des Messrohrs 2 ist in dessen Innerem ein Staukörper 4 angeordnet, der mit dem Messrohr 2 unter Bildung einer dargestellten ersten Fixierstelle 41 und einer verdeckten zweiten Fixierstelle 41* fest verbunden ist. Das Zentrum der Bohrung 22 und das Zentrum der Fixierstelle 41 liegen auf einer Mantellinie des Messrohrs 2.

Der Staukörper 4 hat eine Prallfläche 42, gegen die im Betrieb ein zu messendes Fluid, z.B. eine Flüssigkeit, ein Gas oder ein Dampf, anströmt. Der Staukörper 4 hat ferner zwei Seitenflächen, von denen lediglich eine (vordere) Seitenfläche 43 in den Fig. 1 und 2 zu sehen ist. Von der Prallfläche 42 und den Seitenflächen werden zwei Abrisskanten gebildet, von denen lediglich eine (vordere) Abrisskante 44 vollständig und eine (hintere) Abrisskante 45 andeutungsweise in Fig. 1 zu sehen sind.

Der Staukörper 4 der Fig. 1 und 2 hat im wesentlichen die Form einer geraden Dreieck-Säule, also einer Säule mit einem dreieckigen Querschnitt. Es können jedoch auch andere übliche Formen des Staukörpers bei der Erfindung verwendet werden.

Durch das Anströmen des Fluids gegen die Prallfläche 42 bildet sich stromabwärts vom Staukörper 4 eine Kármán'sche Wirbelstraße im Fluid dadurch aus, dass an jeder Abrisskante abwechselnd Wirbel abreißen und vom strömenden Fluid mitgenommen werden. Diese Wirbel erzeugen lokale Druckschwankungen im Fluid, deren zeitbezogene Abriss-Häufigkeit, also deren sogenannte Wirbelfrequenz, ein Maß für die Strömungsgeschwindigkeit und/oder den Volumendurchfluss des Fluids ist.

Die Druckschwankungen werden mittels des Wirbelsensors 3 in ein elektrisches Wirbelsignal umgeformt, das einer hier nicht gezeigten Auswerte-Elektronik zugeführt wird, die die Strömungsgeschwindigkeit und/oder den Volumendurchfluss des Fluids in üblicher Weise berechnet.

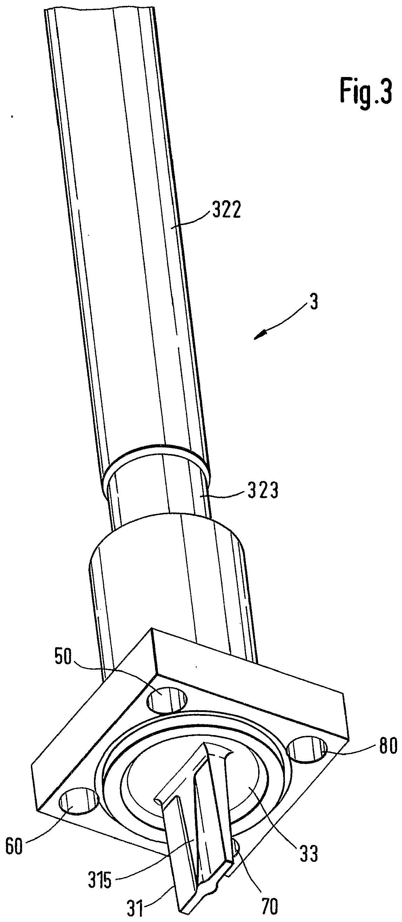

Der Wirbelsensor 3 ist stromabwärts vom Staukörper 4 in die Bohrung 22 der Rohrwand 21 des Messrohrs 2 eingesetzt und dichtet die Bohrung 22 zur Mantelfläche des Messrohrs 2 hin ab, wozu der Wirbelsensor 3 mit der Rohrwand 21 verschraubt ist. Hierzu dienen z.B. vier Schrauben, von denen in den Fig. 1 und 2 die Schrauben 5, 6, 7 zu sehen sind, während in Fig. 3 zugehörige Bohrungen 50, 60, 70, 80 dargestellt sind.

Vom Wirbelsensor 3 ist eine in den Fig. 1 und 2 in das Innere des Messrohrs 2 durch die Bohrung 22 der Rohrwand 21 hindurch ragende keilförmige Sensorfahne 31 und eine Gehäusekappe 32 zu sehen. Die Gehäusekappe 32 läuft unter Einfügung eines dünner-wandigen Zwischenstücks 323 in eine Verlängerung 322 aus, vgl. die erwähnte US-A 60 03 384.

Die Sensorfahne 31 hat Hauptflächen, von denen in den Fig. 1 und 2 nur die Hauptfläche 311 zu sehen ist. Die Hauptflächen fluchten mit der erwähnten Mantellinie des Messrohrs 2 und bilden eine Frontkante 313. Die Sensorfahne 31 kann auch andere geeignete Raumformen haben; so kann sie z.B. zwei parallele Hauptflächen aufweisen, die zwei parallele Frontkanten bilden.

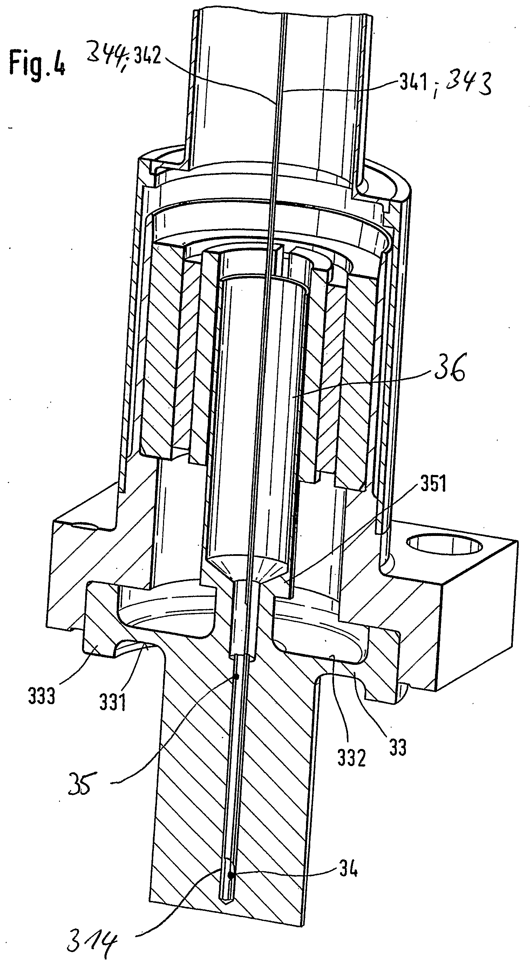

Die Sensorfahne 31 ist kürzer als der Durchmesser des Messrohrs 2; sie ist ferner biegesteif und weist ein Sackloch 314 auf (nur in Fig. 4 zu sehen). Damit das Sackloch 314 einen ausreichenden Durchmesser hat, treten aus den Hauptflächen Wandteile hervor, von denen in Fig. 3 der Wandteil 315 angedeutet ist. Das Sackloch 314 reicht bis in die Nähe der Frontkante 313 und hat dort einen Boden.

Zum Wirbelsensor 3 gehört ferner eine die Bohrung 22 überdeckende Membran 33 mit einer fluid-zugewandten ersten Oberfläche 331 und einer fluid-abgewandten zweiten Oberfläche 332, siehe die Fig. 3 und 4. An der Oberfläche 331 ist die Sensorfahne 31 fixiert und an der Oberfläche 332 ein Sensorelement 36. Bevorzugt sind die Sensorfahne 31, die Membran 33, deren ringförmiger Rand 333 und der an der Membran 33 befestigte Teil 361 des Sensorelements 36 aus einem einzigen Materialstück, z.B. Metall, insb. Edelstahl, hergestellt. Das Sensorelement 36 erzeugt das oben erwähnte Signal, dessen Frequenz proportional zum Volumendurchfluss des strömenden Fluids ist.

In der Nähe des Bodens des Sacklochs 314 ist ein erster Temperatursensor 34 fixiert, der dazu dient ein von einer Temperatur im strömenden Fluid beeinflußtes Temperatursignal an die bereits erwähnte Auswerte-Elektronik zu liefern. Ebenfalls im Sackloch 314 ist oberhalb des Temperatursensors 34 ein zweiter Temperatursensor 35 angeordnet mittels dem im Betrieb ein zweites, ebenfalls von der Temperatur im Fluid beeinflußtes Temperatursignal erzeugt wird. Beide Temperatursensoren 34, 35 sind bevorzugt mittels Platin-Widerständen, z.B. Pt 100 oder Pt 1000, realisiert; es können aber z.B. auch Thermolelemente oder temperaturempfindliche Halbleiterelemente für die Temperatursensoren 34, 35 verwendet werden.

Da die Sensorfahne 31 und insb. deren Wandteil 315 ausreichend dünn gemacht werden können und außerdem bevorzugt aus Metall bestehen, liegt der näher zum Boden des Sacklochs 314 angeordnete Temperatursensor 34 praktisch auf der momentanen Temperatur des an der Sensorfahne 31 vorbeiströmenden Fluids. Er ist wegen der geringen Wärme-Kapazität der Anordnung auch sehr gut in der Lage, Temperaturänderungen des Fluids ausreichend schnell und praktisch verzögerungslos zu folgen.

Der Temperatursensor 35 ist dagegen bevorzugt nahe zur Membran 33 hin im Sackloch 314 positioniert, so daß mittels des Temperatursensor 35 eine möglichst wenig von den momentanen Strömungsverhältnissen im Fluid beeinflußte Temperatur erfaßt werden kann..

Somit kann unter Verwendung der von den Temperatursensoren 34 bzw. 35 gelieferten Temperatursignalen in Verbindung z.B. mit in der Auswerte-Elektronik gespeicherten mathematischen Modellen für den Wärmeübergang vom Fluid zur Sensorfahne 31 oder Wärmeausbreitungsvorgänge innerhalb der Sensorfahne 31 die Temperatur weitaus genauer bestimmt werden als mit z.B. nur einem einzigen Temperatursensor.

Ausgehend von einer entsprechend hochgenau bestimmten Fluid-Temperatur in Verbindung mit dem ebenfalls ermittelten momentane Volumendurchfluß kann nunmehr auch eine Dichte und/oder ein Massedurchfluß des Fluids hoch genau bestimmt werden. Darüber hinaus können auch die Reynolds- sowie auch die Strouhal-Zahl im Betrieb anhand der so ermittelten Fluid-Temperatur sehr genau bestimmt werden und somit allfälige Korrekturen des gemessenen Volumendurchflusses vorgenommen werden.

Jeweils paarweise mit dem Temperatursensor 34 bzw. 35 verbundene, der Ankopplung der Temperatursensoren 34, 35 an die Auswerte-Elektronik dienende Zuleitungen 341, 342, 343, 344 führen zentral nach oben durch den Wirbelsensor 3 hindurch. In baulich vorteilhafter Weise kann jeweils eine der Zuleitungen eines Paars 341, 342 oder 343, 344 Zuleitungen entfallen, wenn der Temperatursensor 34 bzw. 35 einseitig mit der Sensorfahne 31 elektrisch kontaktiert ist und somit auf dem Potential eines Schaltungsnullpunkts liegt; es können aber z.B. auch die Zuleitungen 341, 343 durch eine gemeinsame Schaltungsnullpunktsleitung ersetzt werden.

Zur Fixierung der beiden Temperatursensoren 34, 35 im Sackloch 314 wird letzteres bei der Herstellung des Wirbelsensors 3 nach der Positionierung der Temperatursensoren 34, 35 mit Vergußmasse, insb. einer Vergußmasse mit hoher Temperaturleitfähigkeit und hoher Temperaturfestigkeit, verfüllt. Als Vergußmasse kann z.B. Keramik-Kleber oder Epoxyd-Harz verwendet werden.

In vorteilhafter Weise kann das Sackloch 314 im oberen membrannahen Bereich, insb. im Bereich der hervortretenden Wandteile, im Vergleich zum bodennahen Bereich etwas aufgeweitet sein, um so die Montage der beiden Temperatursensoren 34, 35 und deren Zuleitungen 341, 342, 343, 344 und/oder das Einfüllen von Vergußmasse zu erleichtern.

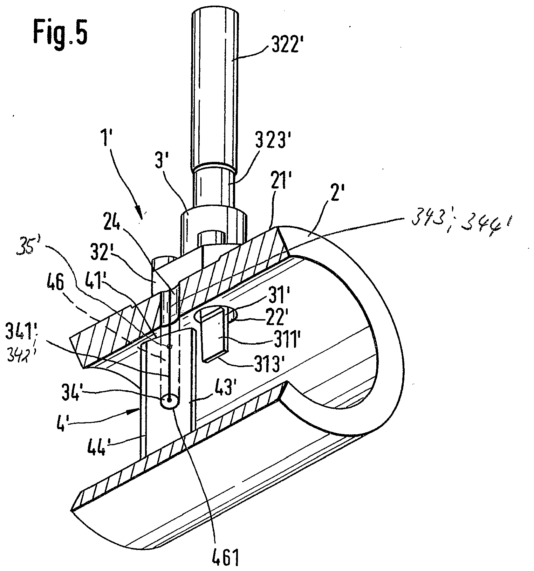

In Fig. 5 ist in Analogie zu Fig. 2 perspektivisch und teilweise aufgeschnitten ein Wirbelströmungsaufnehmer 1' entsprechend der zweiten Variante der Erfindung dargestellt. Die mit den Teilen von Fig. 2 gleichartigen Teile von Fig. 5 sind nicht nochmals erläutert, jedoch sind deren Bezugszeichen in Fig. 2 mit einem Apostroph versehen.

Die Unterschiede des Ausführungsbeispiels der zweiten Variante der Erfindung gegenüber dem Ausführungsbeispiel deren ersten Variante bestehen einerseits darin, dass der Staukörper 4' mit einem Sackloch 46 versehen ist, das mit einer zweiten Bohrung 24 in der Rohrwand 2' fluchtet und in das die beiden Temperatursensoren 34', 35' eingesetzt sind, sowie andererseits darin, dass die keilförmige Sensorfahne 31' zwei ebene Hauptflächen 311' aufweist. Die Temperatursensor 34', 35' sind in entsprechender Weise mit Zuleitungen 341' und 342' bzw. 343' und 344' verbunden.

Das Sackloch 46 kann bis zu einer beliebigen Tiefe im Staukörper 4' vorgesehen sein; bevorzugt liegt dessen Boden 461 so, dass der Temperatursensor 34' in der Mitte des Staukörpers 4' angeordnet ist. Analog zur ersten Variante ist der zweite Temperatursensor 35' bevorzugt möglichst nah zur Rohrwand 21' im Sackloch 46 angeordnet.

Da der Staukörper 4' im Bereich des Sacklochs 46 ausreichend dünn gemacht werden kann und ebenfalls wie die Sensorfahne 31 der Fig. 1 bis 4 bevorzugt aus Metall, insb. Edelstahl, besteht, liegt der Temperatursensor 34' praktisch wiederum auf der momentanen Temperatur des am Staukörper 4' vorbeiströmenden Fluids und ist wegen der geringen Wärme-Kapazität der Anordnung auch sehr gut in der Lage, Temperaturänderungen des Fluids ausreichend schnell und praktisch verzögerungslos zu folgen. Somit kann aus der von den Temperatursensoren 34', 35' gelieferten Temperatursignalen eine Temperatur des Fluids, insb. unter Verwendung von mathematischen Modellen für den Wärmeübergang vom Fluid zum Staukörper 4' oder Wärmeausbreitungsvorgänge innerhalb des Staukörpers 4', sehr genau gemessen werden.

Der erfindungsgemäße Wirbelströmungsaufnehmer ist aufgrund der hohen Genauigkeit, mit der sowohl die Strömungsgeschwindigkeit als auch die Temperatur des strömenden Fluids gemessen werden kann, hervorragend auch für die Messung von Dampf geeignet, insb. auch zur Bestimmung der im strömenden Fluid gespeicherten Wärmemenge und/oder der Dichte des Fluids.

## Patentansprüche

1. Wirbelströmungsaufnehmer (1) zum Messen einer Strömungsgeschwindigkeit, eines Volumendurchflusses und/oder eines Massedurchflusses eines in einer Rohrleitung strömenden Fluids, welcher Wirbelströmungsaufnehmer (1) umfasst:
- ein in den Verlauf der Rohrleitung eingesetztes Messrohr (2) zum Führen des strömenden Fluids,
- einen im Lumen des Messrohrs (2) angeordneten, der Erzeugung Kármán'scher Wirbel im Fluid dienenden Staukörper (4),
- einen auf von den Wirbeln erzeugte Druckschwankungen ansprechenden Wirbelsensor (3)
-- mit einer stromabwärts vom Staukörper (4) in das strömende Fluid eintauchenden, von den Wirbeln, insb. wiederholt, bewegte Sensorfahne (31), und
-- mit wenigstens einem an die Sensorfahne (31) mechanisch gekoppeltes und auf Bewegungen der Sensorfahne (31) reagierendes Sensorelement (36), sowie
- einen ersten Temperatursensor (34) und wenigstens einen zweiten Temperatursensor (35) zum Erfassen von Temperaturen im strömenden Fluid,
- wobei die beiden Temperatursensoren (34, 35) innerhalb der Sensorfahne (31) voneinander beabstandet angeordnet und so darin eingesetzt sind, daß sie im Betrieb vom strömenden Fluid nicht benetzt werden, sowie
- eine Auswerte-Elektronik zur Berechnung der Strömungsgeschwindigkeit, des Volumendurchflusses bzw. des Massendurchflusses anhand des vom Wirbelsensor gelieferten Wirbelsignals, wobei die Auswerte-Elektronik dafür eingerichtet ist, unter Verwendung der von den Temperatursensoren (34,35) gelieferten Temperatursignale in Verbindung mit in der Auswerte- Elektronik gespeicherten mathematischen Modellen für den Wärmeübergang vom Fluid zur Sensorfahne (31) oder Wärmeausbreitungsvorgänge innerhalb der Sensorfahne (31) die Temperatur des Fluids zu bestimmen.

2. Wirbelströmungsaufnehmer (1) nach Anspruch 1, bei dem die Sensorfahne (31) wenigstens ein Sackloch (314) aufweist, in das wenigstens einer der beiden Temperatursensoren (34, 35) eingesetzt ist.

3. Wirbelströmungsaufnehmer (1') zum Messen einer Strömungsgeschwindigkeit, eines Volumendurchflusses und/oder eines Massedurchflusses eines in einer Rohrleitung strömenden Fluids, welcher Wirbelströmungsaufnehmer (1') umfasst:
- ein in den Verlauf der Rohrleitung eingesetztes Messrohr (2') zum Führen des strömenden Fluids,
- einen im Lumen des Messrohrs (2') angeordneten, der Erzeugung Kármán'scher Wirbel im Fluid dienenden Staukörper (4'),
- einen auf von den Wirbeln erzeugte Druckschwankungen ansprechenden Wirbelsensor (3')
-- mit einer stromabwärts vom Staukörper (4') in das strömende Fluid eintauchenden, von den Wirbeln, insb. wiederholt, bewegte Sensorfahne (31'), und
-- mit wenigstens einem an die Sensorfahne (31') mechanisch gekoppeltes und auf Bewegungen der Sensorfahne (31') reagierendes Sensorelement (36'), sowie
- einen ersten Temperatursensor (34') und wenigstens einen zweiten Temperatursensor (35') zum Erfassen von Temperaturen im strömenden Fluid,
- wobei die beiden Temperatursensoren (34', 35') innerhalb des Staukörpers (4') voneinander beabstandet angeordnet und so darin eingesetzt, daß sie im Betrieb vom strömenden Fluid nicht benetzt werden, sowie
- eine Auswerte-Elektronik zur Berechnung der Strömungsgeschwindigkeit, des Volumendurchflusses bzw. des Massendurchflusses anhand des vom Wirbelsensor gelieferten Wirbelsignals, wobei die Auswerte-Elektronik dafür eingerichtet ist, unter Verwendung der von den Temperatursensoren (34,35) gelieferten Temperatursignale in Verbindung mit in der Auswerte- Elektronik gespeicherten mathematischen Modellen für den Wärmeübergang vom Fluid zum Staukörper (4') oder Wärmeausbreitungsvorgänge innerhalb des Staukörpers (4') die Temperatur des Fluids zu bestimmen.

4. Wirbelströmungsaufnehmer (1) nach Anspruch 1, bei dem der Staukörper (4') wenigstens ein Sackloch (314') aufweist, in das wenigstens einer der beiden Temperatursensoren (34', 35') eingesetzt ist.

5. Wirbelströmungsaufnehmer (1; 1') nach Anspruch 2 oder 4, bei dem die Temperatursensoren (34, 35; 34', 35') in das wenigstens Sackloch (314; 314') eingesetzt sind.

6. Wirbelströmungsaufnehmer nach Anspruch 5, wobei das Sackloch (314) zur Fixierung der beiden Temperatursensoren (34, 35) mit Vergußmasse, insb. einer Vergußmasse mit hoher Temperaturleitfähigkeit und hoher Temperaturfestigkeit, verfüllt ist.

7. Wirbelströmungsaufnehmer nach Anspruch 6, wobei Keramik-Kleber als Vergußmasse verwendet ist.

8. Wirbelströmungsaufnehmer nach Anspruch 6, wobei Epoxyd-Harz als Vergußmasse verwendet ist.

9. Wirbelströmungsaufnehmer nach einem der Ansprüche 5 bis 8, wobei der zweite Temperatursensor (35) oberhalb des ersten Temperatursensors (34) angeordnet ist.

10. Wirbelströmungsaufnehmer nach einem der vorherigen Ansprüche, wobei mittels des Wirbelsensors (3) Druckschwankungen im Fluid in ein elektrisches Wirbelsignal umgeformt werden.

11. Wirbelströmungsaufnehmer nach Anspruch 10, wobei das elektrische Wirbelsignal eine zum Volumendurchfluß des strömenden Fluids proportionale Frequenz aufweist.

12. Wirbelströmungsaufnehmer nach Anspruch 10 oder 11, wobei das elektrische Wirbelsignal einer Auswerte-Elektronik zugeführt wird, die eine Strömungsgeschwindigkeit und/oder einen Volumendurchfluß des Fluids berechnet.

13. Wirbelströmungsaufnehmer nach einem der vorherigen Ansprüche, wooei der Wirbelsensor und/oder der Staukörper aus Metall, insb. Edelstahl, hergestellt sind.

14. Wirbelströmungsaufnehmer nach einem der vorherigen Ansprüche, wobei die Sensorfahne (31) aus Metall besteht.

15. Wirbelströmungsaufnehmer nach einem der vorherigen Ansprüche, wobei die Sensorfahne (31) kürzer als ein Durchmesser des Meßrohrs (2) ist.

16. Wirbelströmungsaufnehmer nach einem der vorherigen Ansprüche, wobei die Sensorfahne mit einer Mantellinie des Meßrohrs (2) fluchtende, insb. einen Keil mit einer einzigen Frontkante (313, 313') bildende, Hauptflächen (311) aufweist.

17. Wirbelströmungsaufnehmer nach einem der Ansprüche 1 bis 15, wobei wobei die Sensorfahne zwei parallele Hauptflächen aufweist, die zwei parallele Frontkanten bilden.

18. Wirbelströmungsaufnehmer nach einem der vorherigen Ansprüche, wobei die Temperatursensoren (34, 35) mittels Platin-Widerständen, insb. Pt 100 oder Pt 1000, realisiert sind.

19. Wirbelströmungsaufnehmer nach einem der vorherigen Ansprüche, wobei für die Temperatursensoren (34, 35) Thermolelemente oder temperaturempfindliche Halbleiterelemente verwendet sind.

20. Verwenden eines Wirbelströmungsaufnehmers nach einem der vorherigen Ansprüche zum Ermitteln eines Massedurchflusses eines in einer Rohrleitung strömenden Fluids, insb. einer Flüssigkeit, einem Gas oder Dampf, und/oder zur Bestimmung einer in einem strömenden Fluid gespeicherten Wärmemenge und/oder einer Dichte eines Fluids.

## Claims

1. Vortex flow sensor (1) designed for measuring a flow velocity, a volume flow and/or a mass flow of a fluid flowing through a pipe,
wherein said vortex flow sensor (1) comprises:
- a measuring tube (2) inserted in the course of the pipe to conduct the flowing fluid,
- a bluff body (4) arranged in the interior channel of the measuring tube (2) and serving to generate Karman vortices in the fluid,
- a vortex sensor (3) that reacts to pressure fluctuations generated by the vortices
-- with a sensor vane (31) that is located downstream from the bluff body (4), immerses into the flowing fluid and is moved by the vortices, particularly repeatedly, and
-- with at least one sensor element (36) which is mechanically coupled to the sensor vane (31) and responds to movements of the sensor vane (31),
as well as
- a first temperature sensor (34) and at least a second temperature sensor (35) to measure temperatures in the flowing fluid,
- wherein the two temperature sensors (34, 35) are arranged inside the sensor vane (31) at a distance from one another and are inserted therein in such a way that they are not covered by the flowing fluid during operation, and
- evaluation electronics to calculate the flow velocity, the volume flow or mass flow using the vortex signal supplied by the vortex sensor, wherein the evaluation electronics are designed to determine the temperature of the fluid using the temperature signals supplied by the temperature sensors (34, 35) in conjunction with mathematical models, which are saved in the evaluation electronics, for the transition of heat from the fluid to the sensor vane (31) or heat dispersion processes within the sensor vane (31).

2. Vortex flow sensor (1) as claimed in Claim 1, wherein the sensor vane (31) has at least one blind hole (314) in which at least one of the two temperature sensors (34, 35) is inserted.

3. Vortex flow sensor (1') designed for measuring a flow velocity, a volume flow and/or a mass flow of a fluid flowing through a pipe,
wherein said vortex flow sensor (1') comprises:
- a measuring tube (2') inserted in the course of the pipe to conduct the flowing fluid,
- a bluff body (4') arranged in the interior channel of the measuring tube (2') and serving to generate Karman vortices in the fluid,
- a vortex sensor (3') that reacts to pressure fluctuations generated by the vortices
-- with a sensor vane (31') that is located downstream from the bluff body (4'), immerses into the flowing fluid and is moved by the vortices, particularly repeatedly, and
-- with at least one sensor element (36') which is mechanically coupled to the sensor vane (31') and responds to movements of the sensor vane (31'),
as well as
- a first temperature sensor (34') and at least a second temperature sensor (35') to measure temperatures in the flowing fluid,
- wherein the two temperature sensors (34', 35') are arranged inside the bluff body (4') at a distance from one another and are inserted therein in such a way that they are not covered by the flowing fluid during operation, and
- evaluation electronics to calculate the flow velocity, the volume flow or mass flow using the vortex signal supplied by the vortex sensor, wherein the evaluation electronics are designed to determine the temperature of the fluid using the temperature signals supplied by the temperature sensors (34, 35) in conjunction with mathematical models, which are saved in the evaluation electronics, for the transition of heat from the fluid to the bluff body (4') or heat dispersion processes within the bluff body (4').

4. Vortex flow sensor (1) as claimed in Claim 1, wherein the bluff body (4') has at least one blind hole (314') in which at least one of the two temperature sensors (34', 35') is inserted.

5. Vortex flow sensor (1, 1') as claimed in Claim 2 or 4, wherein the temperature sensors (34, 35, 34', 35') are inserted into the at least one blind hole (314, 314').

6. Vortex flow sensor as claimed in Claim 5, wherein, for the purpose of fixing the two temperature sensors (34, 35) in place, the blind hole (314) is filled with a potting compound, particularly a potting compound with high thermal conductivity and high thermal stability.

7. Vortex flow sensor as claimed in Claim 6, wherein ceramic adhesive is used as the potting compound.

8. Vortex flow sensor as claimed in Claim 6, wherein epoxy resin is used as the potting compound.

9. Vortex flow sensor as claimed in one of the Claims 5 to 8, wherein the second temperature sensor (35) is arranged above the first temperature sensor (34).

10. Vortex flow sensor as claimed in one of the previous claims, wherein pressure fluctuations in the fluid are converted to an electrical vortex signal by the vortex sensor (3).

11. Vortex flow sensor as claimed in Claim 10, wherein the electrical vortex signal has a frequency that is proportional to the volume flow of the flowing fluid.

12. Vortex flow sensor as claimed in Claim 10 or 11, wherein the electrical vortex signal is supplied to evaluation electronics which calculate a flow velocity and/or a volume flow of the fluid.

13. Vortex flow sensor as claimed in one of the previous claims, wherein the vortex sensor and/or the bluff body are made from metal, particularly stainless steel.

14. Vortex flow sensor as claimed in one of the previous claims, wherein the sensor vane (31) is made from metal.

15. Vortex flow sensor as claimed in one of the previous claims, wherein the sensor vane (31) is shorter than a diameter of the measuring tube (2).

16. Vortex flow sensor as claimed in one of the previous claims, wherein the sensor vane has main surfaces (311) that are aligned with a generating line of the measuring tube (2), particularly forming a wedge with a single front edge (313, 313').

17. Vortex flow sensor as claimed in one of the Claims 1 to 15, wherein the sensor vane has two parallel main surfaces that form two parallel front edges.

18. Vortex flow sensor as claimed in one of the previous claims, wherein the temperature sensors (34, 35) are implemented using platinum resistors, notably Pt 100 or Pt 1000.

19. Vortex flow sensor as claimed in one of the previous claims, wherein thermocouples or temperature-sensitive semi-conductor elements are used for the temperature sensors (34, 35).

20. Use of a vortex flow sensor as claimed in one of the previous claims to determine a mass flow of a fluid flowing through a pipe, particularly a liquid, a gas or steam and/or to determine a heat quantity stored in a flowing fluid and/or a density of a fluid.

## Revendications

1. Débitmètre Vortex (1) destiné à la mesure d'une vitesse d'écoulement, d'un débit volumique et/ou d'un débit massique d'un fluide s'écoulant dans une conduite, lequel débitmètre Vortex (1) comprend :
- un tube de mesure (2) inséré dans le cheminement de la conduite, destiné à guider le fluide en écoulement,
- un corps de retenue (4) disposé dans le canal intérieur du tube de mesure (2), servant à la génération de tourbillons de Karman dans le fluide,
- un capteur Vortex (3) détectant les fluctuations de pression générées par les tourbillons
-- avec une languette de capteur (31) pénétrant dans le fluide en écoulement en aval du corps de retenue (4), déplacée notamment de façon répétée par les tourbillons, et
-- avec au moins un élément capteur (36) couplé mécaniquement à la languette de capteur (31) et réagissant aux mouvements de la languette de capteur (31), ainsi que
- un premier capteur de température (34) et au moins un deuxième capteur de température (35) destinés à mesurer des températures dans le fluide en écoulement,
- les deux capteurs de température (34, 35) étant disposés, de façon espacée l'un par rapport à l'autre, dans la languette de capteur (31) et y sont introduits de telle sorte à ne pas être en contact avec le fluide en écoulement pendant le fonctionnement, ainsi que
- une électronique d'exploitation destinée au calcul de la vitesse d'écoulement, du débit volumique ou du débit massique au moyen du signal Vortex délivré par le capteur Vortex, l'électronique d'exploitation étant conçue - en utilisant les signaux de température fournis par les capteurs de température (34, 35), en liaison avec des modèles mathématiques enregistrés dans l'électronique d'exploitation, relatifs au transfert thermique du fluide vers la languette de capteur (31) ou aux processus de propagation de la chaleur au sein de la languette de capteur (31) - pour déterminer la température du fluide.

2. Débitmètre Vortex (1) selon la revendication 1, pour lequel la languette de capteur (31) présente au moins un trou borgne (314), dans lequel est introduit au moins l'un des deux capteurs de température (34, 35).

3. Débitmètre Vortex (1') destiné à la mesure d'une vitesse d'écoulement, d'un débit volumique et/ou d'un débit massique d'un fluide s'écoulant dans une conduite, lequel débitmètre Vortex (1') comprend :
- un tube de mesure (2') inséré dans le cheminement de la conduite, destiné à guider le fluide en écoulement,
- un corps de retenue (4') disposé dans le canal intérieur du tube de mesure (2'), servant à la génération de tourbillons de Karman dans le fluide,
- un capteur Vortex (3') détectant les fluctuations de pression générées par les tourbillons
-- avec une languette de capteur (31') pénétrant dans le fluide en écoulement en aval du corps de retenue (4'), déplacée notamment de façon répétée par les tourbillons, et
-- avec au moins un élément capteur (36') couplé mécaniquement à la languette de capteur (31') et réagissant aux mouvements de la languette de capteur (31'), ainsi que
- un premier capteur de température (34') et au moins un deuxième capteur de température (35') destinés à mesurer des températures dans le fluide en écoulement,
- les deux capteurs de température (34', 35') étant disposés, de façon espacée l'un par rapport à l'autre, dans le corps de retenue (4') et y sont introduits de telle sorte à ne pas être en contact avec le fluide en écoulement pendant le fonctionnement, ainsi que
- une électronique d'exploitation destinée au calcul de la vitesse d'écoulement, du débit volumique ou du débit massique au moyen du signal Vortex délivré par le capteur Vortex, l'électronique d'exploitation étant conçue - en utilisant les signaux de température fournis par les capteurs de température (34', 35'), en liaison avec des modèles mathématiques enregistrés dans l'électronique d'exploitation, relatifs au transfert thermique du fluide vers le corps de retenue (4') ou aux processus de propagation de la chaleur au sein du corps de retenue (4') - pour déterminer la température du fluide.

4. Débitmètre Vortex (1) selon la revendication 1, pour lequel le corps de retenue (4') présente au moins un trou borgne (314'), dans lequel est introduit l'un des deux capteurs de température (34', 35').

5. Débitmètre Vortex (1, 1') selon la revendication 2 ou 4, pour lequel les capteurs de température (34, 35, 34', 35') sont introduits dans l'au moins un trou borgne (314, 314').

6. Débitmètre Vortex selon la revendication 5, pour lequel le trou borgne (314) est rempli, en vue de la fixation des deux capteurs de température (34, 35), avec la masse de scellement, notamment une masse de scellement avec une conductivité thermique élevée et une résistance thermique élevée.

7. Débitmètre Vortex selon la revendication 6, pour lequel une colle céramique est utilisée comme masse de scellement.

8. Débitmètre Vortex selon la revendication 6, pour lequel une résine époxy est utilisée comme masse de scellement.

9. Débitmètre Vortex selon l'une des revendications 5 à 8, pour lequel le deuxième capteur de température (35) est disposé au-dessus du premier capteur de température (34).

10. Débitmètre Vortex selon l'une des revendications précédentes, pour lequel les fluctuations de pression dans le fluide sont converties par le capteur Vortex (3) en un signal Vortex électrique.

11. Débitmètre Vortex selon la revendication 10, pour lequel le signal Vortex électrique présente une fréquence proportionnelle au débit volumique du fluide en écoulement.

12. Débitmètre Vortex selon la revendication 10 ou 11, pour lequel le signal Vortex électrique est acheminé à une électronique d'exploitation, qui calcule une vitesse d'écoulement et/ou un débit volumique du fluide.

13. Débitmètre Vortex selon l'une des revendications précédentes, pour lequel le capteur Vortex et/ou le corps de retenue sont en métal, notamment en acier inoxydable.

14. Débitmètre Vortex selon l'une des revendications précédentes, pour lequel la languette de capteur (31) est en métal.

15. Débitmètre Vortex selon l'une des revendications précédentes, pour lequel la languette de capteur (31) est plus courte que le diamètre du tube de mesure (2).

16. Débitmètre Vortex selon l'une des revendications précédentes, pour lequel la languette de capteur présente des surfaces principales (311) affleurantes avec une génératrice du tube de mesure (2), formant notamment un coin avec une unique arête frontale (313, 313').

17. Débitmètre Vortex selon l'une des revendications 1 à 15, pour lequel la languette de capteur présente deux surfaces principales parallèles, qui forment deux arêtes frontales parallèles.

18. Débitmètre Vortex selon l'une des revendications précédentes, pour lequel les capteurs de température (34, 35) sont réalisés au moyen de résistances de platine, notamment Pt 100 ou Pt 1000.

19. Débitmètre Vortex selon l'une des revendications précédentes, pour lequel des thermocouples ou des éléments semi-conducteurs sensibles à la température sont utilisés pour les capteurs de température (34, 35).

20. Utilisation d'un débitmètre Vortex selon l'une des revendications précédentes, destiné à déterminer un débit massique d'un fluide s'écoulant dans une conduite, notamment un liquide, un gaz ou une vapeur, et/ou destiné à la détermination d'une quantité de chaleur accumulée dans un fluide en écoulement, et/ou d'une densité d'un fluide.
